# EUROPÄISCHE PATENTSCHRIFT

(11) **EP 3 418 518 B1**
(45) Veröffentlichungstag und Bekanntmachung des Hinweises auf die Patenterteilung: **11.03.2020**
(21) Anmeldenummer: 18178251.7
(22) Anmeldetag: 18.06.2018
(51) Int. Cl.: F01N 3/20, F01N 3/035, F01N 13/00

(54) **ABGASNACHBEHANDLUNGSSYSTEM UND VERFAHREN ZUR ABGASNACHBEHANDLUNG EINES VERBRENNUNGSMOTORS**
WASTE GAS TREATMENT SYSTEM AND METHOD FOR TREATING THE WASTE GAS OF A COMBUSTION ENGINE
SYSTÈME DE RETRAITEMENT DES GAZ D'ÉCHAPPEMENT ET PROCÉDÉ DE RETRAITEMENT DES GAZ D'ÉCHAPPEMENT D'UN MOTEUR À COMBUSTION INTERNE

(30) Priorität: 21.06.2017 DE 102017113712
(43) Veröffentlichungstag der Anmeldung: 26.12.2018
(73) Patentinhaber: VOLKSWAGEN AKTIENGESELLSCHAFT, 38440 Wolfsburg (DE)
(72) Erfinder: POTT, Ekkehard, 38518 Gifhorn (DE); GROENENDIJK, Axel, 38518 Gifhorn (DE); ALMES, Alexander, 38239 Salzgitter (DE); SCHMIDT, Thorsten, 38106 Braunschweig (DE)
(74) Vertreter: Gulde & Partner

(56) Entgegenhaltungen:
- WO-A1-2017/168156
- DE-A1-102012 205 534
- DE-A1-102012 222 929
- DE-A1-102015 200 023

## Beschreibung

Die Erfindung betrifft ein Abgasnachbehandlungssystem für einen Verbrennungsmotor sowie ein Verfahren zur Abgasnachbehandlung eines Verbrennungsmotors gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sind im Allgemeinen aus 32,5% Harnstoff und 67,5% Wasser zusammen.

Um nach einem Kaltstart des Verbrennungsmotors die Abgasnachbehandlungskomponenten möglichst schnell auf die benötigte Betriebstemperatur zu bringen, ist eine möglichst motornahe Anordnung der Abgasnachbehandlungskomponenten wünschenswert. Dies ist jedoch nicht immer möglich, da der Bauraum begrenzt ist. Daher werden der SCR-Katalysator und/oder der Rußpartikelfilter oftmals in einer motorfernen Unterbodenlage eines Kraftfahrzeuges angeordnet. Für eine hocheffiziente Abgasreinigung ist jedoch eine schnelle Durchwärmung der gesamten Abgasnachbehandlungskomponenten erforderlich. In den meisten Abgasanlagen erfolgt dies rein thermisch, das heißt durch eine Aufheizung der Abgasnachbehandlungskomponenten durch das Abgas des Verbrennungsmotors. Dabei werden die in Strömungsrichtung dem Auslass des Verbrennungsmotors folgenden Abgasnachbehandlungskomponenten nach und nach erwärmt. Diese Strategie kann durch motorische Heizmaßnahmen, wie beispielsweise die Wahl eines späten Einspritzzeitpunktes oder einer Nacheinspritzung von Kraftstoff in die Brennräume des Verbrennungsmotors unterstützt werden. Bei einem Partikelfilter mit einer Beschichtung zur selektiven, katalytischen Reduktion von Stickoxiden (SCR-Beschichtung), welche einem Oxidationskatalysator nachgeschaltet ist, kann dies bei einem Betrieb wie in dem NEFZ-Prüfzyklus dazu führen, dass die SCR-Beschichtung des Partikelfilters erst einige Minuten nach dem Kaltstart des Verbrennungsmotors ein Temperaturfenster erreicht, in welchem eine wirksame Reduktion von Stickoxiden durch den SCR-Katalysator erfolgen kann.

Aus dem Stand der Technik ist bekannt, diesem Mangel durch einen vorgeschalteten NOx-Speicherkatalysator anstelle des Oxidationskatalysators zu begegnen. Da der NOx-Speicherkatalysator in der Abgasanlage stromaufwärts des Partikelfilters mit SCR-Beschichtung angeordnet ist, erwärmt sich dieser nach einem Kaltstart schneller auf seine Anspringtemperatur und kann das Zeitfenster verkürzen, ab dem das Abgasnachbehandlungssystem effizient die Stickoxid-Emissionen verringern kann. Nachteilig an einem solchen NOx-Speicherkatalysator ist jedoch, dass neben den zusätzlichen Kosten für eine ausreichende einspeicherbare NOx-Masse sinnvollerweise ein vergleichsweise großes Volumens des NOx-Speicherkatalysators von mindestens 1dm³ pro Liter Hubvolumen des Verbrennungsmotors vorgehalten werden muss, was die Aufwärmung der in Strömungsrichtung dahinter liegenden Abgasnachbehandlungskomponenten weiter verzögert.

Ebenfalls ist aus dem Stand der Technik der Einsatz von elektrisch beheizbaren Katalysatoren zur schnelleren Erwärmung der Komponenten zur Abgasnachbehandlung bekannt. Üblicherweise sind für eine ausreichende mechanische Stabilität die Heizscheiben der elektrisch beheizbaren Katalysatoren mit einem Stützkatalysator verstiftet. Diese Einheit wird üblicherweise als Oxidationskatalysator ausgeführt, wobei der elektrisch beheizbare Katalysator vor oder hinter dem Stützkatalysator angeordnet ist. Sowohl der elektrisch beheizbare Oxidationskatalysator als auch der Stützkatalysator werden dabei vorzugsweise als Metallkatalysatoren ausgeführt.

Die Anordnung eines elektrisch beheizbaren Katalysators vor dem Stützkatalysator hat den Nachteil, dass vor nennenswertem Wärmeeintrag in den Partikelfilter mit SCR-Beschichtung zunächst der Stützkatalysator selbst durchwärmt werden muss, was wiederum eine zeitliche Verzögerung des Erreichens der Anspringtemperatur der SCR-Beschichtung auf dem Partikelfilter zur Folge hat.

Aus der DE 10 2005 013 707 A1 ist ein Abgasnachbehandlungssystem für einen Verbrennungsmotor bekannt, bei dem in Strömungsrichtung eines Abgases des Verbrennungsmotors durch die Abgasanlage des Verbrennungsmotors ein Oxidationskatalysator, ein Dieselpartikelfilter und ein SCR-Katalysator angeordnet sind. Dabei wird stromabwärts des Partikelfilters und stromaufwärts des SCR-Katalysators wässrige Harnstofflösung in die Abgasanlage eindosiert, um die Stickoxide auf dem SCR-Katalysator zu reduzieren. Dabei ist an dem Oxidationskatalysator oder an dem SCR-Katalysator eingangsseitig ein elektrisches Heizelement vorgesehen, um das Temperaturniveau in der Abgasanlage anzuheben. Nachteilig an einer solchen Lösung ist jedoch, dass bei einem Heizelement, welches dem Oxidationskatalysator vorgeschaltet ist, der Oxidationskatalysator und der Partikelfilter durchgewärmt werden müssen, bevor eine signifikante Erwärmung des SCR-Katalysators erfolgt. Bei einer Anordnung des elektrischen Heizelements unmittelbar vor dem SCR-Katalysator kann das elektrische Heizelement nicht zur Verbesserung der HC- und CO-Emissionen in der Kaltstartphase beitragen.

Die Anordnung des elektrisch beheizbaren Katalysators hinter dem Stützkatalysator ist in dieser Hinsicht vorteilhafter, da sowohl der Partikelfilter mit der SCR-Beschichtung schneller durchwärmt wird als auch die Aufbereitung der wässrigen Harnstofflösung durch die schnellere Wärmebereitstellung hinter dem Oxidationskatalysator unterstützt wird. Nachteilig ist jedoch in beiden Fällen die hohe axiale Wärmeleitfähigkeit der Metallkatalysatoren. Gewünscht wird sowohl eine schnelle Aktivierung des Oxidationskatalysators zur Konvertierung von Kohlenwasserstoff-(HC) und Kohlenstoffmonoxid-(CO)-Emissionen sowie zur Oxidation von Stickstoffmonoxid (NO) zu Stickstoffdioxid (NO₂) als auch eine schnelle Erwärmung des Partikelfilters mit der SCR-Beschichtung auf eine Anspringtemperatur der SCR-Beschichtung.

Aus der DE 10 2008 013 777 A1 ist eine Abgasanlage für einen Verbrennungsmotor bekannt, bei der ein Heizelement stromabwärts eines Auslasses des Verbrennungsmotors und stromaufwärts eines Oxidationskatalysators angeordnet ist, um Wärmeenergie in das Abgas der Verbrennungsmotors einzuleiten. Dabei ist stromabwärts des Oxidationskatalysators ein Katalysator zur selektiven, katalytischen Reduktion von Stickoxiden vorgesehen, um die Stickoxide im Abgas zu reduzieren. Dabei ist dem Verbrennungsmotor bzw. der Abgasanlage ein Steuergerät zugeordnet, welches mit dem Heizelement in Verbindung steht und das Heizelement in Abhängigkeit von der Temperatur des SCR-Katalysators zuschaltet.

Aus der DE 10 2012 222 292 A1 ist ein Abgasnachbehandlungssystem für einen Verbrennungsmotor bekannt, welches einen Vorratsbehälter mit Absorptionsmitteln, einen elektrisch beheizbaren Katalysator und einen SCR-Katalysator aufweist. Dabei absorbiert das Absorbtionsmittel das Wasser oder den Wasserdampf im Abgas des Verbrennungsmotors.

Die DE 10 2012 205 534 A1 offenbart ein Verfahren zum elektrischen Aufheizen eines Bauteils in einem Abgasnachbehandlungssystem eines Kraftfahrzeuges, wobei an dem Kraftfahrzeug ein Solarmodul angeordnet ist und die Energie zum Aufheizen der Abgasnachbehandlungskomponente zumindest anteilig aus dem Solarmodul bereitgestellt wird.

Aus der DE 10 2015 200 023 A1 ist ein Abgasnachbehandlungssystem mit einem Stickoxid-Speicherkatalysator und einem dem Stickoxid-Speicherkatalysator nachgeschalteten SCR-Katalysator bekannt. Dabei ist stromaufwärts des Stickoxid-Speicherkatalysators ein elektrisches Heizelement vorgesehen, um den Abgasstrom zu beheizen.

Die WO 2017 / 168 156 A1 offenbart ein Abgasnachbehandlungssystem mit einem NOx-Speicherkatalysator, einem SCR-Katalysator und einem elektrischen Heizelement, wobei das Heizelement stromabwärts des NOx-Speicherkatalysators angeordnet ist.

Aufgabe der Erfindung ist es, die SCR-Beschichtung des Partikelfilters bei einem moderaten Mehrverbrauch möglichst schnell nach einem Kaltstart des Verbrennungsmotors auf eine Anspringtemperatur zu bringen, bei der eine wirksame Reduktion von Stickoxiden durch die SCR-Beschichtung möglich ist.

Erfindungsgemäß wird diese Aufgabe durch ein Abgasnachbehandlungssystem gelöst, bei dem in einer Abgasanlage eines Verbrennungsmotors, insbesondere eines Dieselmotors, stromabwärts eines Auslasses des Verbrennungsmotors ein Oxidationskatalysator oder ein NOx-Speicherkatalysator und unmittelbar stromabwärts des Oxidationskatalysators oder NOx-Speicherkatalysators ein elektrisch beheizbarer Katalysator und weiter stromabwärts ein Partikelfilter mit einer SCR-Beschichtung oder ein SCR-Katalysator angeordnet sind, wobei dem Oxidationskatalysator oder dem NOx-Speicherkatalysator ein Startkatalysator vorgeschaltet ist, welcher in der Abgasanlage von dem Oxidationskatalysator oder dem NOx-Speicherkatalysator beabstandet ist, um eine konduktive Wärmeübertragung von dem Oxidationskatalysator oder NOx-Speicherkatalysator auf den Startkatalysator zu minimieren.

Durch die in den abhängigen Ansprüchen aufgeführten Merkmale sind vorteilhafte Verbesserungen und Weiterentwicklungen des im unabhängigen Anspruch angegebenen Abgasnachbehandlungssystems möglich.

In einer bevorzugten Ausführungsform der Erfindung ist vorgesehen, dass der Startkatalysator als Oxidationskatalysator ausgeführt ist.

In einer vorteilhaften Ausführungsform des Abgasnachbehandlungssystems ist vorgesehen, dass das aufsummierte Katalysatorvolumen des Startkatalysators, des Oxidationskatalysators oder des NOx-Speicherkatalysators und des elektrisch beheizbaren Katalysators maximal so groß wie der Hubraum des Verbrennungsmotors, bevorzugt maximal 80% des Hubraums des Verbrennungsmotors, besonders bevorzugt maximal 70% des Hubraums des Verbrennungsmotors, ist.

Besonders bevorzugt ist dabei, wenn der Startkatalysator maximal 40 % des gesamten Katalysatorvolumens der Summe der Katalysatorvolumina von Startkatalysator, Oxidationskatalysator und elektrisch beheizbarem Katalysator, vorzugsweise maximal 30 % des gesamten Katalysatorvolumens dieser Katalysatoren aufweist.

Erfindungsgemäß ist vorgesehen, dass der Startkatalysator eine geringe Folienstärke und/oder eine geringere Zellzahl als der Oxidationskatalysator oder der NOx-Speicherkatalysator aufweist.

Erfindungsgemäß ist vorgesehen, dass der Startkatalysator und der Oxidationskatalysator oder der NOx-Speicherkatalysator denselben Außendurchmesser aufweisen und in einem gemeinsamen Mantel untergebracht sind. Dabei ist es vorteilhaft, wenn über zumindest 90% der zugewandten Stirnflächen ein Mindestabstand zwischen der Abström-Stirnfläche des Startkatalysators und der Anström-Stirnfläche des Oxidationskatalysators oder der NOx-Speicherkatalysator von mindestens 0,5 mm, vorzugsweise von mindestens einem Millimeter, besonders bevorzugt von mindestens 2,5 mm eingehalten wird. Dabei sollte der Abstand 10 mm, vorzugsweise 5 mm nicht übersteigen.

Nicht erfindungsgemäß kann der Startkatalysator auch gegenüber dem Oxidationskatalysator einen abweichenden, insbesondere einen kleineren Außendurchmesser aufweisen. In diesem Fall ist die Einhaltung der genannten Mindestabstände durch einen zwischenliegenden Trichter, welcher den Abgaskanalquerschnitt von dem Startkatalysator auf den Abgaskanalquerschnitt des Oxidationskatalysators oder des NOx-Speicherkatalyators anpasst, sichergestellt. Alternativ ist die Anordnung des Startkatalysators stromabwärts des Auslasses des Verbrennungsmotors und stromaufwärts zumindest einer Turbine eines Abgasturboladers des Verbrennungsmotors oder in einem Anströmtrichter des Oxidationskatalysators oder des NOx-Speicherkatalysators denkbar.

Gemäß einer bevorzugten Ausführungsform der Erfindung ist vorgesehen, dass der elektrisch beheizbare Katalysator eine Edelmetallbeschichtung, insbesondere Platin-, Palladium- oder Rhodiumbeschichtung aufweist oder mit einer Beschichtung als Hydrolysekatalysator, insbesondere mit einer Titandioxidbeschichtung, versehen ist.

Besonders bevorzugt ist dabei, wenn an der Abgasanlage ein Dosiermodul zur Eindosierung eines Reduktionsmittels angeordnet ist, wobei eine Einspritzöffnung des Dosiermoduls zumindest teilweise auf den Hydrolysekatalysator gerichtet ist. In diesem Fall kann es sinnvoll sein, zumindest einen Teil des Reduktionsmittels, insbesondere der wässrigen Harnstofflösung, direkt auf den Hydrolysekatalysator einzudosieren, mit dem Ziel einer verbesserten Verdampfung und Umsetzung der wässrigen Harnstofflösung in Ammoniak (NH₃).

In einer vorteilhaften Verbesserung ist vorgesehen, dass stromabwärts des elektrisch beheizbaren Katalysators und stromaufwärts des Partikelfilters mit der SCR-Beschichtung ein Dosiermodul zur Eindosierung eines Reduktionsmittels angeordnet ist, wobei die Eindosierung des Reduktionsmittels mit einem Einspritzdruck von mindestens 20 bar, vorzugsweise von mindestens 50 bar erfolgt.

Erfindungsgemäß wird ein Verfahren zur Abgasnachbehandlung eines Verbrennungsmotors mit dem oben genannten erfindungsgemäßen Abgasnachbehandlungssystem vorgeschlagen, welches folgende Schritte umfasst:
- Beheizen der Abgasanlage durch den Verbrennungsmotor, wobei die Abgastemperatur des Verbrennungsmotors durch innermotorische Maßnahmen erhöht wird;
- gleichzeitiges Beheizen des elektrisch beheizbaren Katalysators bis eine Temperatur der SCR-Beschichtung des Partikelfilters erreicht ist, welche oberhalb der Light-Off-Temperatur der SCR-Beschichtung liegt;
- wobei eine Wärmeleitung von dem elektrisch beheizbaren Katalysator auf den Startkatalysator unterbunden wird, indem der Startkatalysator von dem elektrisch beheizbaren Katalysator derart beabstandet angeordnet wird, dass eine konduktive Wärmeübertragung zwischen dem elektrisch beheizbaren Katalysator und dem Startkatalysator ausschließlich über eine Wand des Abgaskanals erfolgen kann.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel eines erfindungsgemäßen Abgasnachbehandlungssystems für einen Verbrennungsmotor;
- Figur 2: ein Beispiel eines nicht erfindungsgemäßen Abgasnachbehandlungssystems für einen Verbrennungsmotor; und
- Figur 3: ein Diagramm zur Visualisierung eines erfindungsgemäßen Verfahrens zur Abgasnachbehandlung eines Verbrennungsmotors.

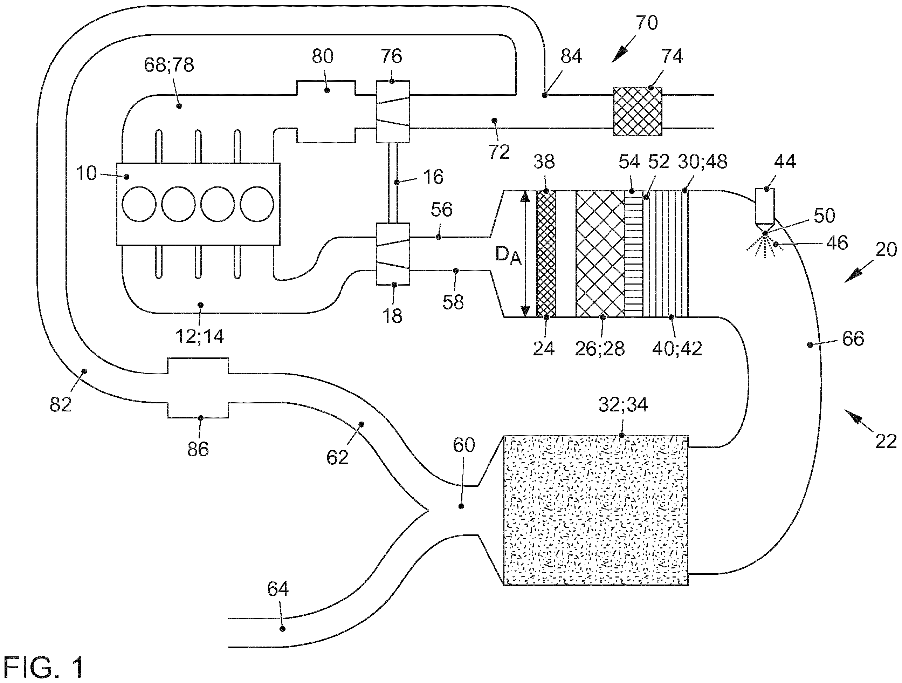

Figur 1 zeigt ein Ausführungsbeispiel eines erfindungsgemäßen Abgasnachbehandlungssystems 20 eines Verbrennungsmotors 10. Der Verbrennungsmotor 10 weist einen Auslass 12, insbesondere einen Abgaskrümmer 14 auf, welcher mit einer Abgasanlage 22 des Verbrennungsmotors 10 verbunden ist. Der Verbrennungsmotor 10 ist als selbstzündender Verbrennungsmotor 10 nach dem Diesel-Prinzip ausgeführt. In der Abgasanlage 22 des Verbrennungsmotors 10 ist stromabwärts des Auslasses 12 eine Turbine 18 eines Abgasturboladers 16 angeordnet, mit welcher ein Verdichter 76 zur Luftversorgung des Verbrennungsmotors 10 angetrieben wird. Der Verbrennungsmotor 10 weist eine Einlassseite 68 auf, welche mit einem Ansaugtrakt 70 des Verbrennungsmotors 10 verbunden ist. Der Ansaugtrakt 70 umfasst eine Frischgasleitung 72, in welcher ein Luftfilter 74 und stromabwärts des Luftfilters 74 mindestens ein Verdichter 76 eines Abgasturboladers 18 angeordnet ist. Stromabwärts des Verdichters 76 und stromaufwärts eines Einlasses 78 des Verbrennungsmotors 10 ist ein Ladeluftkühler 80 angeordnet, um die durch den Verdichter 76 komprimierte Frischluft abzukühlen und somit die Füllung der Brennräume des Verbrennungsmotors 10 weiter zu verbessern. Der Verbrennungsmotor 10 weist ferner eine Auslassseite 14 auf, an welcher ein Abgaskrümmer 22 ausgebildet ist, welcher mit einem Abgassystem 20 des Verbrennungsmotors 10 verbunden ist.

Die Abgasanlage 22 weist stromabwärts der Turbine 18 einen motornahen Startkatalysator 24 auf, welcher vorzugsweise als Oxidationskatalysator 38 ausgebildet ist. Stromabwärts des Startkatalysators 24 ist ein Stützkatalysator, insbesondere ein weiterer Oxidationskatalysator 26 oder ein NOx-Speicherkatalysator 28 angeordnet. Unmittelbar stromabwärts des Stützkatalysators ist ein elektrisch beheizbarer Katalysator 30 angeordnet. Der elektrisch beheizbare Katalysator 30 weist ein elektrisches Heizelement, insbesondere eine elektrische Heizscheibe 52 auf, welche vorzugsweise mit dem Stützkatalysator 26, 28 zur Erhöhung der mechanischen Stabilität über eine Verstiftung 54 verbunden ist. Dabei sind der elektrisch beheizbare Katalysator 30 und der Stützkatalysator 26, 28 als Metallkatalysatoren ausgeführt, um eine hohe mechanische Stabilität zu ermöglichen. Unter einer motornahen Anordnung ist in diesem Zusammenhang eine Anordnung mit einer Abgaslauflänge von maximal 60 cm, vorzugsweise von maximal 40 cm, ab dem Auslass 12 des Verbrennungsmotors 10 zu verstehen. Das aufsummierte Katalysatorvolumen von Startkatalysator 24, Stützkatalysator 26, 28 und elektrisch beheizbarem Katalysator 30 liegt für Dieselmotoren mit weniger als 3 Liter Hubraum bei maximal 3 dm³, insbesondere maximal beim Hubvolumen des Verbrennungsmotors 10. Bevorzugt beträgt das aufsummierte Katalysatorvolumen von Startkatalysator 24, Stützkatalysator 26, 28 und elektrisch beheizbarem Katalysator 40 maximal 80% des Hubraums des Verbrennungsmotors 10, besonders bevorzugt maximal 70% des Hubraums. Der Startkatalysator 24 weist dabei maximal 40% dieses aufsummierten Volumens, vorzugsweise 30% des Gesamtvolumens auf. Die Folienstärke und/oder Zellzahl des Startkatalysators 24 können unterhalb der Werte des Stützkatalysators 26, 28 liegen. So wird der Startkatalysator beispielsweise mit einer Zelldichte von 200 Zellen pro Quadratinch und mit 40 µm Folienstärke und der Stützkatalysator 26, 28 mit einer Zelldichte von 400 Zellen pro Quadratinch und einer Folienstärke von 65 µm ausgeführt. Ebenso kann die Edelmetallbeladung hinsichtlich spezifischer Beladung und Zusammensetzung zwischen dem Startkatalysator 24 und dem Stützkatalysator 26, 28 unterschiedlich sein. Für ein noch schnelleres Anspringen des Startkatalysators 24 kann eine um 20% höhere spezifische Beladung des Startkatalysators, vorzugsweise eine um 45% höhere spezifische Beladung, besonders bevorzugt eine um 70% höhere spezifische Beladung, des Startkatalysators 24 gegenüber dem Stützkatalysator 26, 28 sinnvoll sein.

Der elektrisch beheizbare Katalysator kann eine Edelmetallbeschichtung 40, insbesondere eine Platin-, Rhodium- oder Paladiumbeschichtung, aufweisen, unbeschichtet sein, oder mit einer Beschichtung 42 als Hydrolysekatalysator 48 versehen sein.

Der Startkatalysator 24 und der Stützkatalysator 26, 28 können denselben Außendurchmesser D_{A} aufweisen und in einem gemeinsamen Mantel, insbesondere einem gemeinsamen Gehäuse, untergebracht sein. Dabei ist es vorteilhaft, wenn über zumindest 90% der einander zugewandten Stirnflächen von Startkatalysator 24 und Stützkatalysator 26, 28 ein Mindestabstand von mindestens 0,5mm, vorzugsweise von mindestens 1mm, besonders bevorzugt von 2,5mm eingehalten wird, um eine konduktive Wärmeübertragung zu unterbinden und eine Wärmeübertragung durch Wärmestrahlung zu minimieren.

Stromabwärts des elektrisch beheizbaren Katalysators 30 ist ein Partikelfilter 32 mit einer Beschichtung 34 zur selektiven, katalytischen Reduktion von Stickoxiden (SCR-Beschichtung) angeordnet. Stromabwärts des Partikelfilters 32 ist eine Verzweigung 60 der Abgasanlage 22 vorgesehen, an der sich ein Abgaskanal 56 in eine Niederdruck-Abgasrückführung 62 und einen Unterbodenkanal 64 verzweigt, welcher den Partikelfilter 32 mit einem Endrohr der Abgasanlage 22 verbindet. Die Niederdruck-Abgasrückführung 62 weist einen Abgasrückführungskanal 82 auf, welcher den Abgaskanal 56 an der Verzweigung 60 stromabwärts des Partikelfilters 32 mit einer Einmündung 84 in den Ansaugtrakt 70 stromabwärts des Luftfilters 74 und stromaufwärts des Verdichters 76 verbindet. Die Niederdruck-Abgasrückführung 62 weist einen Niederdruck-Abgasrückführungs-Kühler 86 auf, mit welchem das zurückgeführte Abgas vor der Zumischung zur Frischluft im Ansaugtrakt 70 abgekühlt wird.

Stromabwärts des elektrisch beheizbaren Katalysators 30 und stromaufwärts des Partikelfilters 32 mit der SCR-Beschichtung 34 ist ein Dosiermodul 44 zur Eindosierung eines Reduktionsmittels 46, insbesondere wässriger Harnstofflösung, vorgesehen. Dabei weist der Abgaskanal 56 der Abgasanlage 22 in dem Bereich zwischen dem elektrisch beheizbaren Katalysator 30 und dem Partikelfilter 32 ein Umlenkelement 66 auf. Durch die Umlenkung des Abgasstroms entsteht eine Verwirbelung, welche eine Vermischung des eindosierten Reduktionsmittels 46 mit dem Abgas vor einem Eintritt in den Partikelfilter 32 begünstigt und somit die Verdampfung des Reduktionsmittels und die Gleichverteilung über den Querschnitt des Abgaskanals 56 verbessert. Dieser Effekt kann gegebenenfalls durch einen nicht dargestellten Abgasmischer im Umlenkelement 66 unterstützt werden.

Weist der elektrisch beheizbare Katalysator 30 eine Beschichtung 42 zur Hydrolyse, beispielsweise eine Titandioxidbeschichtung, auf und ist als Hydrolysekatalysator 48 ausgebildet, so ist es vorteilhaft, wenn eine Einspritzöffnung 50 des Dosiermoduls 44 auf den Hydrolysekatalysator 48 gerichtet ist. Dadurch wird eine bessere Verdampfung des Reduktionsmittels und eine verbesserte Freisetzung von Ammoniak zur selektiven, katalytischen Reduktion von Stickoxiden auf der SCR-Beschichtung 34 des Partikelfilters 32 erreicht. Zur besseren Gemischaufbereitung des Reduktionsmittels 46 ist es vorteilhaft, wenn das Dosiermodul 44 als Hochdruck-Dosiermodul ausgebildet ist und einen Einspritzdruck von mindestens 20 bar, vorzugsweise von mindestens 50 bar aufweist.

Durch die zunehmende Verschärfung der Abgasgesetzgebung, insbesondere in Bezug auf die Stickoxid-Emissionen, ist es notwendig, innermotorische Maßnahmen und Maßnahmen zur Abgasnachbehandlung zu verbinden. Eine Möglichkeit, die Rohemissionen des Verbrennungsmotors 10 zu verbessern, besteht darin, der Frischluft Abgas zuzumischen, um die Bildung von Stickoxid-Emissionen zu verringern. Dabei ist es vorteilhaft, wenn das zurückgeführte Abgas möglichst kühl ist. Aus diesem Grund ist in der Niederdruck-Abgasrückführung 62 ein Niederdruck-Abgasrückführungs-Kühler 86 angeordnet.

Um die Emissionen, insbesondere die Stickoxid-Emissionen, in der Startphase des Verbrennungsmotors 10 zu verbessern, ist es notwendig, die Stickoxid-reduzierenden Abgasnachbehandlungskomponenten, insbesondere den NOx-Speicherkatalysator 28 und den Partikelfilter 32 mit der SCR-Beschichtung 34 möglichst schnell auf eine Anspringtemperatur aufzuheizen. Ferner ist es notwendig, zur Reduzierung der Emissionen an unverbrannten Kohlenwasserstoffen (HC) und Kohlenstoffmonoxid (CO) zumindest einen der oxidativ wirksamen Katalysatoren 24, 26, 28, 30 auf seine Light-Off-Temperatur aufzuheizen, ab der eine effiziente Umsetzung dieser Emissionen möglich ist.

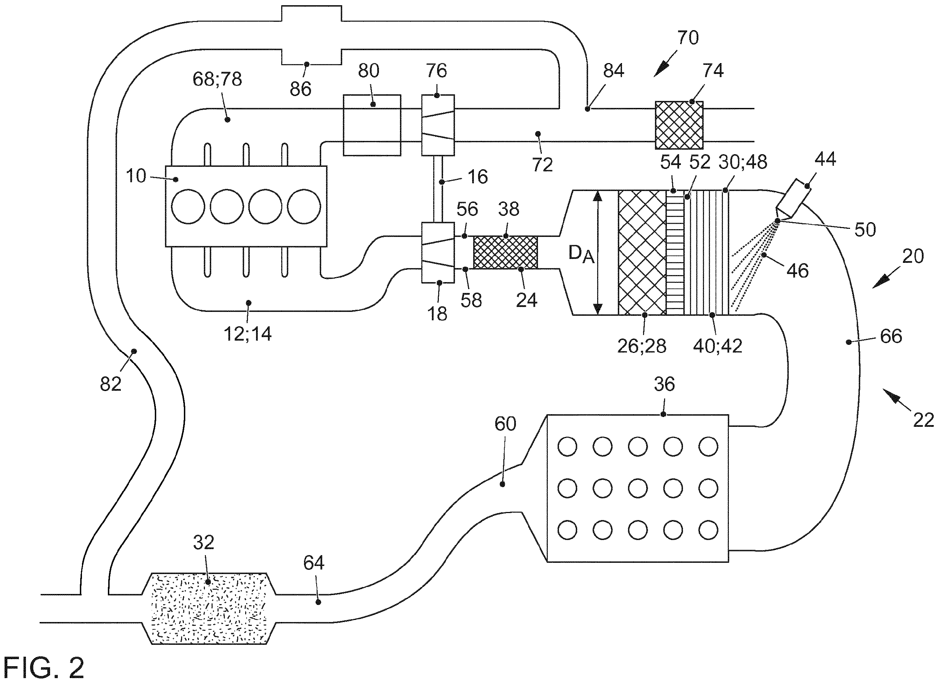

In Figur 2 ist ein Beispiel eines nicht erfindungsgemäßen Abgasnachbehandlungssystems 20 dargestellt. Bei im Wesentlichen gleichem Aufbau wie zu Figur 1 ausgeführt wird im Folgenden nur auf die Unterschiede eingegangen. Der Startkatalysator 24 ist in der Abgasanlage 22 weiter stromaufwärts und somit näher an dem Auslass 12 des Verbrennungsmotors 10 angeordnet. Dabei kann der Startkatalysator 24 stromaufwärts oder stromabwärts einer Turbine 18 des Abgasturboladers 16 angeordnet werden. Vorzugsweise ist der Startkatalysator 24 stromabwärts der Turbine 18 angeordnet. Zwischen dem Startkatalysator 24 und dem Stützkatalysator 26, 28 ist ein Abgastrichter ausgebildet, wodurch der Abstand zwischen Startkatalysator 24 und Stützkatalysator 26, 28 weiter vergrößert wird. Dabei wird eine Wärmeübertragung zwischen dem Startkatalysator 24 und dem Stützkatalysator 26, 28 mit Ausnahme der konvektiven Wärmeübertragung durch den Abgasstrom minimiert. Ferner kann stromaufwärts eines Partikelfilters 32 mit einer SCR-Beschichtung 24 ein SCR-Katalysator 36 angeordnet sein, wobei das Abgasnachbehandlungssystem 20 in diesem Fall einen Partikelfilter 32 aufweist kann, welcher zur Unterstützung der Partikelminderung eine Edelmetallbeschichtung aufweist.

Dabei bietet das erfindungsgemäß vorgeschlagene Abgasnachbehandlungssystem 20 auch verfahrensseitig Vorteile gegenüber den aus dem Stand der Technik bekannten Lösungen. Im Stand der Technik sind Verfahren bekannt, bei denen das Aufheizen der Abgasnachbehandlungskomponenten ausschließlich durch innermotorische Maßnahmen wie eine späte Kraftstoffeinspritzung, eine Füllungsreduzierung, eine frühes Öffnen der Auslassventile, eine Hochdruck-Abgasrückführung oder eine Kombination dieser Maßnahmen erfolgt. Ebenso ist aus dem Stand der Technik bekannt, die Abgastemperatur alternativ oder zusätzlich durch eine katalytische Umsetzung von unverbrannten Kohlenwasserstoffen oder Kohlenstoffmonoxid auf einem Oxidationskatalysator anzuheben, sobald der Oxidationskatalysator seine Light-Off-Temperatur erreicht hat. Dazu wird insbesondere eine späte Nacheinspritzung während oder nach dem Brennende des Kraftstoffs im Brennraum genutzt. Da die Anspringtemperatur im Startkatalysator gegenüber dem nachgeschalteten Stützkatalysator 26, 28 schneller ansteigt und die Wärmeleitung auf ein Mindestmaß über die Wände 58 des Abgaskanals 56 reduziert ist, kann die katalytische Heizung deutlich früher als bei einem ungeteilten Oxidationskatalysator angewendet werden, bei dem der Startkatalysator 24 und der Stützkatalysator 26, 28 durchgewärmt werden müssen.

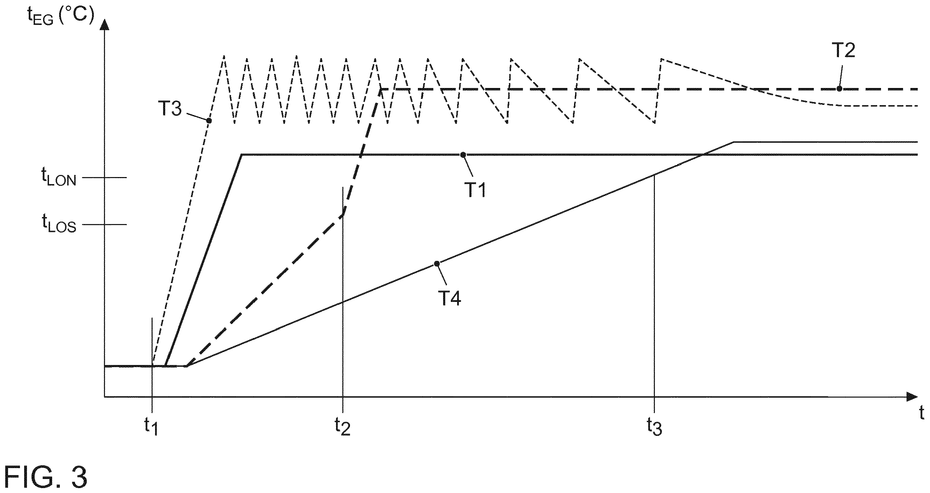

Insgesamt ergibt sich somit nach einem Kaltstart des Verbrennungsmotors 10 ein in Fig.3 skizzierter Verlauf des Aufheizens der einzelnen Abgasnachbehandlungskomponenten. Dabei ist jeweils eine Abgastemperatur T_{EG} an unterschiedlichen Messpunkten in der Abgasanlage 22 im zeitlichen Verlauf dargestellt. Dabei ist in der ersten Kurve T1 der Temperaturverlauf der Abgastemperatur stromaufwärts des Startkatalysators 24 dargestellt. Die zweite Kurve T2 zeigt den Verlauf der Abgastemperatur unmittelbar stromabwärts des Startkatalysators 24. Die dritte Kurve T3 illustriert die Abgastemperatur unmittelbar stromabwärts des elektrisch beheizbaren Katalysators 30. Die vierte Kurve T4 stellt den Verlauf der Temperatur an der SCR-Beschichtung 34 des Partikelfilters 32 dar.

Zu einem Zeitpunkt t₁ wird der Verbrennungsmotor 10 gestartet. Bedingt durch den eingestellten Lastpunkt oder durch Ergreifen bekannter innermotorischer Maßnahmen zur Steigerung der Abgastemperatur T_{EG} wird die Abgastemperatur vor dem Startkatalysator 24 oberhalb der Light-Off-Temperatur T_{LOS} des Startkatalysators 24 eingestellt. Ebenfalls mit Motorstart des Verbrennungsmotors 10 wird die Heizscheibe 52 des elektrisch beheizbaren Katalysators 30 bestromt und vorzugsweise mit einem Zweipunktregler auf eine Temperatur T_{LOP} oberhalb der Light-Off-Temperatur T_{LON} der SCR-Beschichtung 34 des Partikelfilters 32 eingeregelt. Zu einem Zeitpunkt t₂ wird die Light-Off-Temperatur T_{LOS} im Startkatalysator 24 überschritten und alternativ oder zusätzlich können katalytische Heizmaßnahmen zur weiteren Beschleunigung des Aufheizens erfolgen. Im weiteren zeitlichen Verlauf wird der Stützkatalysator 26, 28 allmählich durchwärmt und der Energiebedarf des elektrisch beheizbaren Katalysators 30 nimmt kontinuierlich ab, erkennbar durch die in Figur 3 dargestellten immer länger werdenden unbestromten Phasen zwischen den jeweiligen Heizphasen des elektrisch beheizbaren Katalysators 30. Zu einem Zeitpunkt t₃ wird die Light-Off-Temperatur T_{LON} der SCR-Beschichtung 34 des Partikelfilters 32 erreicht und die Eindosierung des Reduktionsmittels 46 durch das Dosiermodul 44 und eine damit verbundene hocheffiziente Reduzierung der Stickoxide (NOx) kann beginnen. Bei dauerhafter Überschreitung der Light-Off-Temperatur T_{LON} zuzüglich eines applizierbaren Offsets ist keine weitere elektrische Beheizung oder katalytische Beheizung zur Unterstützung des Abgasnachbehandlungssystems 20 mehr erforderlich.

Dabei macht sich der Startkatalysator 24 durch zwei Eigenschaften gegenüber aus dem Stand der Technik bekannten Lösungen positiv bemerkbar:
Zum einen ist durch das geringere Volumen und die geringere Wärmeleitung an den Stützkatalysator 26, 28 ein schnellerer Start der katalytischen Heizmaßnahmen möglich. Zum anderen ist eine schnellere Konvertierung von Stickstoffmonoxid (NO) in Stickstoffdioxid (NO2) möglich, wobei die Eindosierung des Reduktionsmittels 46 zeitlich und somit die Umsetzung der Stickoxide (NOx) durch die SCR-Beschichtung früher erfolgen kann. Dabei kann eine Eindosierung des Reduktionsmittels 46 bereits dann beginnen, wenn der Stützkatalysator 26, 28 noch nicht seine Light-Off-Temperatur T_{LOO} erreicht hat, da die katalytische Leistung des Startkatalysators 24 ausreicht, um eine hinreichende Menge an Stickstoffmonoxid (NO) zu Stickstickdioxid (NO2) zu oxidieren.

Die Kombination aus Startkatalysator 24 als erster Komponenten der Abgasnachbehandlung und dem elektrisch beheizbarem Katalysator 30 stromabwärts des Stützkatalysators 26, 28 erlaubt zudem eine schnellstmögliche Bereitstellung der zwei wesentlichen für eine effizienten Stickoxid (NOx) Umsatz auf der SCR-Beschichtung 34 des Partikelfilters 32 erforderlichen Parameter: Zum einen die hinreichende Oxidation von Stickstoffmonoxid (NO) zu Stickstoffdioxid (NO2) und zum anderen eine hinreichende Gastemperatur das Abgases über den elektrisch beheizbaren Katalysator 30 unabhängig von der thermischen Konditionierung des oxidativen Katalysatorvolumens des Stützkatalysators 26, 28. Selbst bei noch vollständig inaktivem Stützkatalysator 26, 28 ist eine NOx-Konvertierung auf der SCR-Beschichtung 34 des Partikelfilters 32 möglich.

Zusammenfassend lässt sich festhalten, dass die Erfindung ein Abgasnachbehandlungssystem 20 für einen Dieselmotor betrifft. Dabei ist stromabwärts eines Auslasses 12 des Verbrennungsmotors 10 ein Oxidationskatalysator 26 oder ein NOx-Speicherkatalysator 28 angeordnet, welchem unmittelbar ein elektrisch beheizbarer Katalysator 30 nachgeschaltet ist, sodass der elektrisch beheizbare Katalysator 30 den Abgasstrom stromabwärts des Oxidationskatalysators 26 oder NOx-Speicherkatalysators 28 erwärmen kann und der Oxidationskatalysator 26 oder der NOx-Speicherkatalysator 28 zusätzlich durch den elektrisch beheizbaren Katalysator 30 aufgeheizt werden. Dabei ist stromabwärts des elektrisch beheizbaren Katalysators 30 ein Partikelfilter 32 mit einer SCR-Beschichtung 34 vorgesehen, welcher durch den Wärmeeintrag in den elektrisch beheizbaren Katalysator 30 nach einem Kaltstart des Verbrennungsmotors 10 schneller auf eine Anspringtemperatur aufgeheizt werden kann. Stromabwärts des Auslasses 12 und stromaufwärts des Oxidationskatalysators 26 oder NOx-Speicherkatalysators 28 ist ein Startkatalysator 24 vorgesehen, welcher räumlich von dem Oxidationskatalysator 26 oder NOx-Speicherkatalysator 28 beabstandet ist, um einen konduktiven Wärmeübertrag zwischen dem Startkatalysator 24 und dem Oxidationskatalysator 26 oder dem NOx-Speicherkatalysator 28 zu vermeiden und somit eine schnellere Durchwärmung des Startkatalysators 24 nach einem Kaltstart des Verbrennungsmotors 10 zu ermöglichen.

### Bezugszeichenliste

- 10: Verbrennungsmotor
- 12: Auslass
- 14: Abgaskrümmer
- 16: Abgasturbolader
- 18: Turbine

- 20: Abgasnachbehandlungssystem
- 22: Abgasanlage
- 24: Startkatalysator
- 26: Oxidationskatalysator
- 28: NOx-Speicherkatalysator

- 30: elektrisch beheizbarer Katalysator
- 32: Partikelfilter
- 34: SCR-Beschichtung
- 36: SCR-Katalysator
- 38: Oxidationskatalysator

- 40: Edelmetallbeschichtung
- 42: Beschichtung
- 44: Dosiermodul
- 46: Reduktionsmittel
- 48: Hydrolysekatalysator

- 50: Einspritzöffnung
- 52: Heizscheibe
- 54: Verstiftung
- 56: Abgaskanal
- 58: Wand
- 60: Verzweigung
- 62: Niederdruck-Abgasrückführung
- 64: Unterbodenkanal
- 66: Umlenkelement
- 68: Einlassseite

- 70: Ansaugtrakt
- 72: Frischgasleitung
- 74: Luftfilter
- 76: Verdichter
- 78: Einlass

- 80: Ladeluftkühler
- 82: Abgasrückführungskanal
- 84: Einmündung
- 86: Niederdruck-Abgasrückführungs-Kühler

- T: Temperatur
- T1: Abgastemperatur stromaufwärts des Startkatalysators
- T2: Abgastemperatur stromabwärts des Startkatalysators
- T3: Abgastemperatur stromabwärts des elektrisch beheizbaren Katalysators
- T4: Temperatur im Partikelfilter / SCR-Katalysator

- T_{EG}: Abgastemperatur
- T_{LON}: Light-Off-Temperatur des SCR-Katalysators / der SCR-Beschichtung
- T_{LOP}: Temperatur oberhalb der Light-Off-Temperatur des SCR-Katalysators
- T_{LOS}: Light-Off-Temperatur des Start-Katalysators
- T_{LOO}: Light-Off-Temperatur des Oxidationskatalysators / NOx-Speicherkatalysators

- t: Zeit
- t₁: Zeitpunkt 1
- t₂: Zeitpunkt 2
- t₃: Zeitpunkt 3

## Patentansprüche

1. Abgasnachbehandlungssystem (20) für einen Verbrennungsmotor (10), bei dem in einer Abgasanlage (22) des Verbrennungsmotors (10) stromabwärts eines Auslasses (12) des Verbrennungsmotors (10) ein Oxidationskatalysator (26) oder ein NOx-Speicherkatalysator (28) und unmittelbar stromabwärts des Oxidationskatalysators (26) oder NOx-Speicherkatalysators (28) ein elektrisch beheizbarer Katalysator (30) und weiter stromabwärts ein Partikelfilter (32) mit einer SCR-Beschichtung (34) oder ein SCR-Katalysator (36) angeordnet sind, wobei dem Oxidationskatalysator (26) oder dem NOx-Speicherkatalysator (28) ein Startkatalysator (24) vorgeschaltet ist, welcher in der Abgasanlage (22) von dem Oxidationskatalysator (26) oder dem NOx-Speicherkatalysator (28) beabstandet ist, um eine konduktive Wärmeübertragung zwischen dem Oxidationskatalysator (26) oder NOx-Speicherkatalysator (28) und dem Startkatalysator (24) zu minimieren, **dadurch gekennzeichnet, dass** der Startkatalysator (24) eine geringere Folienstärke und/oder eine geringere Zellzahl als der Oxidationskatalysator (26) oder der NOx-Speicherkatalysator (28) aufweist, wobei der Startkatalysator (24) und der Oxidationskatalysator (26) oder der NOx-Speicherkatalysator (28) denselben Außendurchmesser (D_{A}) aufweisen.

2. Abgasnachbehandlungssystem (20) nach Anspruch 1, **dadurch gekennzeichnet, dass** der Startkatalysator (24) als Oxidationskatalysator (38) ausgebildet ist.

3. Abgasnachbehandlungssystem (20) nach Anspruch 1 oder 2, **dadurch gekennzeichnet, dass** das aufsummierte Katalysatorvolumen des Startkatalysators (24), des Oxidationskatalysators (26) oder des NOx-Speicherkatalysators (28) und des elektrisch beheizbaren Katalysators (30) maximal so groß wie der Hubraum des Verbrennungsmotors (10) ist.

4. Abgasnachbehandlungssystem (20) nach Anspruch 3, **dadurch gekennzeichnet, dass** der Startkatalysator (24) maximal 40% des gesamten Katalysatorvolumens der Katalysatoren (24, 26, 28, 30) aufweist.

5. Abgasnachbehandlungssystem (20) nach einem der Ansprüche 1 bis 4, **dadurch gekennzeichnet, dass** der elektrisch beheizbare Katalysator (30) eine Edelmetallbeschichtung (40) aufweist oder mit einer Beschichtung (42) als Hydrolysekatalysator (48) versehen ist.

6. Abgasnachbehandlungssystem (20) nach Anspruch 5, **dadurch gekennzeichnet, dass** an der Abgasanlage (22) ein Dosiermodul (44) zur Eindosierung eines Reduktionsmittels (46) angeordnet ist, wobei eine Einspritzöffnung (50) des Dosiermoduls (44) zumindest teilweise auf den Hydrolysekatalysator (48) gerichtet ist.

7. Abgasnachbehandlungssystem (20) nach einem der Ansprüche 1 bis 6, **dadurch gekennzeichnet, dass** stromabwärts des elektrisch beheizbaren Katalysators (30) und stromaufwärts des Partikelfilters (32) mit der SCR-Beschichtung (34) ein Dosiermodul (44) zur Eindosierung eines Reduktionsmittels (46) angeordnet ist, wobei die Eindosierung des Reduktionsmittels (46) mit einem Einspritzdruck von mindestens 20 bar erfolgt.

8. Verfahren zur Abgasnachbehandlung eines Verbrennungsmotors (10) mit einem Abgasnachbehandlungssystem (20) nach einem der Ansprüche 1 bis 7, umfassend folgende Schritte:
- Beheizen der Abgasanlage (22) durch den Verbrennungsmotor (10), wobei die Abgastemperatur (T_{EG}) des Verbrennungsmotors (10) durch innermotorische Maßnahmen erhöht wird;
- gleichzeitiges Beheizen des elektrisch beheizbaren Katalysators (30), bis eine Temperatur (T_{LOP}) der SCR-Beschichtung (34) des Partikelfilters (32) erreicht ist, welche oberhalb der Light-Off-Temperatur (T_{LON}) der SCR-Beschichtung (34) liegt;
- wobei eine Wärmeleitung von dem elektrisch beheizbaren Katalysator (30) auf den Startkatalysator (24) unterbunden wird, indem der Startkatalysator (24) von dem elektrisch beheizbaren Katalysator (30) derart beabstandet angeordnet wird, dass eine konduktive Wärmeübertragung zwischen dem elektrisch beheizbaren Katalysator (30) und dem Startkatalysator (24) ausschließlich über eine Wand (58) des Abgaskanals (56) erfolgen kann.

## Claims

1. An exhaust gas aftertreatment system (20) for a combustion engine (10), wherein an oxidation catalytic converter (26) or an NOx storage catalytic converter (28) are arranged in an exhaust gas system (22) of the combustion engine (10) downstream of an outlet (12) of the combustion engine (10) and directly downstream of the oxidation catalytic converter (26) or NOx storage catalytic converter (28) an electrically heatable catalytic converter (30) and further downstream a particle filter (32) with an SCR coating (34) or an SCR catalytic converter (36) are arranged, wherein upstream of the oxidation catalytic converter (26) or the NOx storage catalytic converter a starting catalytic converter (24) is disposed, which is spaced apart in the exhaust gas system (22) from the oxidation catalytic converter (26) or the NOx storage catalytic converter (28) to minimise a conductive heat transfer between the oxidation catalytic converter (26) or NOx storage catalytic converter (28) and the starting catalytic converter (24), **characterised in that** the starting catalytic converter (24) has a lower foil thickness and/or lower cell count than the oxidation catalytic converter (26) or the NOx storage catalytic converter (28), wherein the starting catalytic converter (24) and the oxidation catalytic converter (26) or the NOx storage catalytic converter (28) have the same outer diameter (D_{A}).

2. The exhaust gas aftertreatment system (20) according to claim 1, **characterised in that** the starting catalytic converter (24) is configured as oxidation catalytic converter (38).

3. The exhaust gas aftertreatment system (20) according to claim 1 or 2, **characterised in that** the added up catalytic converter volume of the starting catalytic converter (24), the oxidation catalytic converter (26) or the NOx storage catalytic converter (28) and the electrically heatable catalytic converter (30) is at most as large as the cubic capacity of the combustion engine (10).

4. The exhaust gas aftertreatment system (20) according to claim 3, **characterised in that** the starting catalytic converter (24) has at most 40% of the total catalytic converter volume of the catalytic converters (24, 26, 28, 30).

5. The exhaust gas aftertreatment system (20) according to one of the claims 1 to 4, **characterised in that** the electrically heatable catalytic converter (30) has a precious metal coating (40) or is provided with a coating (42) as hydrolysis catalytic converter (48).

6. The exhaust gas aftertreatment system (20) according to claim 5, **characterised in that** a dosing module (44) for dosing a reduction agent (46) is arranged on the exhaust gas system (22), wherein an injection opening (50) of the dosing module (44) is directed at least partially towards the hydrolysis catalytic converter (48).

7. The exhaust gas aftertreatment system (20) according to one of the claims 1 to 6, **characterised in that** a dosing module (44) for dosing a reduction agent (46) is arranged downstream of the electrically heatable catalytic converter (30) and upstream of the particle filter (32) with the SCR coating (34), wherein the dosing of the reduction agent (46) is executed with an injection pressure of at least 20 bar.

8. A method for aftertreating the exhaust gas of a combustion engine (10) with an exhaust gas aftertreatment system (20) according to one of the claims 1 to 7, comprising the following steps:
- heating the exhaust gas system (22) by means of the combustion engine (10), wherein the exhaust gas temperature (T_{EG}) of the combustion engine (10) is increased by innermotoric measures;
- simultaneously heating the electrically heatable catalytic converter (30) until reaching a temperature (T_{LOP}) of the SCR coating (34) of the particle filter (32) that is above the light-off temperature (T_{LON}) of the SCR coating (34);
- wherein a heat conduction from the electrically heatable catalytic converter (30) to the starting catalytic converter (24) is prevented by the starting catalytic converter (24) being arranged spaced apart from the electrically heatable catalytic converter (30) in such a way that a conductive heat transfer between the electrically heatable catalytic converter (30) and the starting catalytic converter (24) can only take place via a wall (58) of the exhaust gas channel (56).

## Revendications

1. Système de retraitement des gaz d'échappement (20) pour un moteur à combustion interne (10), dans lequel dans un système des gaz d'échappement (22) du moteur à combustion interne (10) en aval d'une sortie (12) du moteur à combustion interne (10), sont agencés un catalyseur d'oxydation (26) ou un catalyseur de stockage de NOx (28) et immédiatement en aval du catalyseur d'oxydation (26) ou du catalyseur de stockage de NOx (28) un catalyseur pouvant être chauffé électriquement (30), et plus en aval un filtre à particules (32) avec un revêtement SCR (34) ou un catalyseur SCR (36), le catalyseur d'oxydation (26) ou le catalyseur de stockage de NOx (28) est précédé d'un catalyseur de démarrage (24) qui, dans le système d'échappement des gaz (22) est espacé du catalyseur d'oxydation (26) ou du catalyseur de stockage de NOx (28) pour minimiser un transfert de chaleur conducteur entre le catalyseur d'oxydation (26) ou catalyseur de stockage de NOx (28) et le catalyseur de démarrage (24), **caractérisé en ce que** le catalyseur de démarrage (24) comporte une épaisseur de film inférieure et/ou un nombre de cellules inférieur à celui du catalyseur d'oxydation (26) ou du catalyseur de stockage de NOx (28), dans lequel le catalyseur de démarrage (24) et le catalyseur d'oxydation (26) ou le catalyseur de stockage de NOx (28) ont le même diamètre extérieur (D_{A}).

2. Système de retraitement des gaz d'échappement (20) selon la revendication 1, **caractérisé en ce que** le catalyseur de démarrage (24) est formé comme catalyseur d'oxydation (38).

3. Système de retraitement des gaz d'échappement (20) selon la revendication 1 ou 2, **caractérisé en ce que** le volume total additionné de catalyseur du catalyseur de démarrage (24), du catalyseur d'oxydation (26) ou du catalyseur de stockage de NOx (28) et du catalyseur pouvant être chauffé électriquement (30) est au plus aussi grand que le déplacement du moteur à combustion interne (10).

4. Système de retraitement des gaz d'échappement (20) selon la revendication 3, **caractérisé en ce que** le catalyseur de démarrage (24) a un maximum de 40% du volume total de catalyseur des catalyseurs (24, 26, 28, 30).

5. Système de retraitement des gaz d'échappement (20) selon l'une des revendications 1 à 4, **caractérisé en ce que** le catalyseur pouvant être chauffé électriquement (30) a un revêtement en métal noble (40) ou est pourvu d'un revêtement (42) comme catalyseur d'hydrolyse (48).

6. Système de retraitement des gaz d'échappement (20) selon la revendication 5, **caractérisé en ce qu'**un module de dosage (44) pour doser un agent réducteur (46) est agencé sur le système des gaz d'échappement (22), dans lequel une ouverture d'injection (50) du module de dosage (44) est au moins partiellement dirigée sur le catalyseur d'hydrolyse (48).

7. Système de retraitement des gaz d'échappement (20) selon l'une quelconque des revendications 1 à 6, **caractérisé en ce qu'**en aval du catalyseur des gaz d'échappement électriquement (30) et en amont du filtre à particules (32) avec le revêtement SCR (34) est agencé un module de dosage (44) pour doser un agent réducteur (46), dans lequel le dosage de l'agent réducteur (46) a lieu avec une pression d'injection d'au moins 20 bars.

8. Procédé de retraitement des gaz d'échappement d'un moteur à combustion interne (10) avec un système de retraitement des gaz d'échappement (20) selon l'une des revendications 1 à 7, comprenant les étapes suivantes:
- chauffer le système des gaz d'échappement (22) par le moteur à combustion interne (10), dans lequel la température des gaz d'échappement (T_{EG}) du moteur à combustion interne (10) est augmentée par des mesures du moteur interne;
- chauffer simultanément le catalyseur pouvant être chauffé électriquement (30) jusqu'à ce qu'une température (T_{LOP}) du revêtement SCR (34) du filtre à particules (32) soit atteinte, qui est supérieure à la température d'extinction (T_{LON}) du revêtement SCR (34) ;
- dans lequel une conduction thermique du catalyseur pouvant être chauffé électriquement (30) au catalyseur de démarrage (24) est empêchée par le catalyseur de démarrage (24) du catalyseur pouvant être chauffé électriquement (30) étant agencé espacé de sorte qu'un transfert de chaleur conducteur entre le catalyseur pouvant être chauffé électriquement (30) et le catalyseur de démarrage (24) exclusivement ne puisse qu'avoir lieu à travers une paroi (58) du conduit des gaz d'échappement (56).
